# EUROPEAN PATENT APPLICATION

(11) **EP 1 176 589 A2**
(43) Date of publication of application: **30.01.2002**
(21) Application number: 01202537.5
(22) Date of filing: 02.07.2001
(51) Int. Cl.: G11B 20/00, G11B 20/10

(54) **Information-carrying medium, particularly a music-carrying medium**

(30) Priority: 03.07.2000 NL 1015587
(71) Applicant: van der Heijden, Johannes Henricus Maria, 5491 VD St. Oedenrode (NL)
(72) Inventor: van der Heijden, Johannes Henricus Maria, 5491 VD St. Oedenrode (NL)
(74) Representative: Bleukx, Lucas Lodewijk M.

(57) **Abstract**

Information-carrying medium provided with a track containing information, for example, music which can be read and reproduced, through an electronic device, wherein the track contains parts where the original information is replaced with non relevant information which are by no means related with the original information. The non relevant information can be made of parts which totally lack information or of parts having foreign information such as background noise for example. The length and location of the parts on the track can be randomly distributed.

## Description

The present invention relates to an information-carrying medium provided with a track containing information that can be read or reproduced through an electronic device.

Such an information-carrying medium is generally known. It exists in various embodiments, such as magnetic tapes for picture and/or sound, discs, such as CDs, records or magnetizable discs for sound recording. Such media are always provided with a track controlling the information reading order, so that the information is always made readable in the right order.

It is often desired in practice to have information-carrying media available for demonstrating purposes or similar, so that potential buyers can have an idea of the information present on the medium. This situation very frequently occurs with music-carrying media, but may also occur with picture-carrying media or picture- and sound-carrying media or other types of information such as computer games. This implies the risk that the medium used for demonstrating purposes may be copied, which results in the manufacturer of information-carrying media losing their profit. Such a risk is even increased with the sales techniques being currently used via Internet. Thus, a potential buyer can request the information via its internet connection and decide whether he is sufficiently interested either to buy the product or to copy it from internet. It is therefore important that the provider offers the information the best and the most complete way possible for demonstrating purposes, so increasing the danger of unauthorized copies.

There are such techniques allowing to make available only a small part of the information for demonstrating purposes, more particularly the first part of the introductory part of the information. This has the disadvantage that the potential customer only receives a fragmented picture of the product he finally intends to buy. If he wishes to have the overall information, he needs to carry out all sorts of actions, assuring that a full payment is done, for example, giving his credit card data.

According to another known embodiment, whereby information is made available for demonstrating purposes, the information is made available partially in an accessible form and partially through a coded form, making such information unusable for the potential user. In this case, the introductory information is offered in an accessible form, whereas after some time, the information is made available in a coded form. Otherwise, it is also possible to offer the information about the important parts in an uncoded way and to code some parts, making the whole information unusable. More particularly, when the information has the form of music, such a coding system can be used, making listening to the music unpleasant. Once a potential customer has performed the actions required for paying, the information is freed from the codes, allowing the user to fully enjoy the information.

This method has the inconvenient that, using modern computer techniques, an increasing number of users or customers are able to break the codes used for coding the information and are thereby able to convert back the coded information into the original information present on the medium. This will mean again a further loss of income for the information manufacturer.

An aim of the invention is to provide an information-carrying medium of the type mentioned in the opening paragraph that overcomes the above-mentioned disadvantages.

This aim is reached according to the invention in that the track contains parts where the original information is replaced by irrelevant information being not related to the original information.

Consequently, it results that the person who intends to copy an information-carrying medium used for demonstrating purposes can only make an incomplete copy, which cannot be converted back into the original information, as the irrelevant information is by no way related to it.

Others features and advantages of the invention will be described hereinafter, referring to the accompanying drawings in which :
Fig. 1 is a schematic illustration of a track for an information-carrying medium according to the state of the art, et
Fig. 2 is a schematic illustration of a track for an information-carrying medium according to the invention.

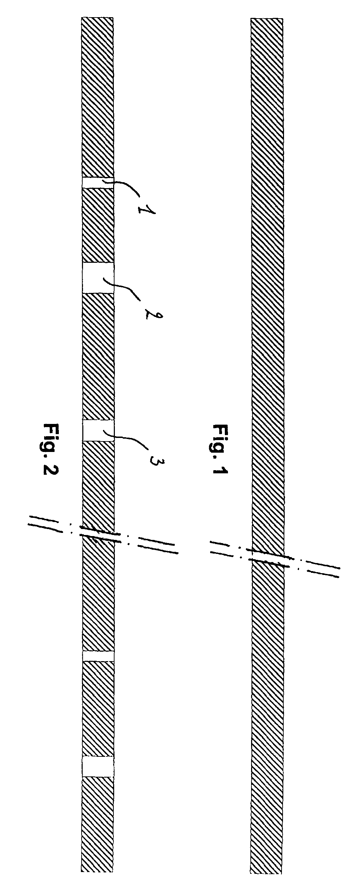

Fig. 1 shows a track for an information-carrying medium according to the state of the art. As schematically indicated by the hatched part, the track comprises a continuous quantity of information, for example, picture and/or sound. The user of such an information-carrying medium, provided he makes use of the appropriate electronic device, can consume information unhindered.

Fig. 2 schematically illustrates a track for an information-carrying medium according to the invention. As schematically indicated by the non hatched areas 1, 2, 3, etc., the track comprises a number of areas or parts containing non relevant information. This non relevant information may be areas or parts which totally lack information. In the case of a sound-carrying medium, that means domains or parts with silences, leading to the information continuity being interrupted. Alternatively, it is possible to fill these parts or domains 1, 2, 3 etc. with non relevant information, which are by no means related to the original information. When music is present as information, this can be background noise, which can be disturbing or not, depending on the intention of the information provider, or other aberrant information, such as other music parts or sound information, either disturbing or not, for example, atonal sounds.

As a result of incorporating parts or domains 1, 2, 3 etc., the information is no longer appropriate for normal use and, consequently, in the case of copying, can lead to an unusable product. Moreover, it is not possible to rebuild the original information on basis of the information which is present in parts or domains 1, 2, 3, etc.

In practice, it is desired to set the number and the distance between parts 1, 2, 3, etc. in such a way that an unusable product is manufactured, but the potential buyer is able to have a very good idea about the product that he will receive when he buys or copies the complete information-carrying medium.

Parts 1, 2, 3, etc. may additionally be completely randomly distributed over the length of the track. This can be an inconvenient, in some cases, in that the same information can be made available to several intermediaries. Thereby, it could theoretically be possible to rebuild again nevertheless the original information-carrying medium using copies obtained from several sources, despite the fact that the separately obtainable information-carrying media are provided with parts 1, 2, 3, etc., since such parts not necessarily converge for the various providers.

It is therefore desired that the location of parts 1, 2, 3, etc. should be constant in relation to the information, for example, at a certain location in relation to the starting point of the information.

The length of parts 1, 2, 3, etc. may additionally be variable, but must be chosen so that the total sensation of the provided information is maintained, but not enjoyable. In case of music as information, it can be operated, for example, with parts having a length in the range of 1 to 5 seconds.

Regarding the length of parts 1, 2, 3, etc., it can also be operated randomly, so that each time another pattern of interruptions appears on the information-carrying medium. This has the above-mentioned disadvantages that two media can be combined into a product without the parts 1, 2, 3, etc.

It is therefore worth recommending to use a pattern wherein the location and the length of the parts 1, 2, 3, etc. are totally fixed in relation to the information. More particularly, it is also worth recommending to use parts 1, 2, 3, etc. wherein the length of one part is totally independent from the length of another part on the same information-carrying medium.

It is obvious that the invention is not limited to the described and illustrated embodiment of the invention, but that numerous modifications can be achieved within the scope of the claims, more particularly, in connection with the shape and content of the parts which do not contain relevant information.

## Claims

1. An information-carrying medium provided with a track containing information which can be read and reproduced through an electronic device, **characterized in that** the track contains parts where the original information is replaced with non relevant information which is by no means related to the original information.

2. An information-carrying medium according to claim 1, **characterized in that** the information consists in music.

3. An information-carrying medium according to claim 1 or 2, **characterized in that** the non relevant information consist in parts which do not contain information.

4. An information-carrying-medium according to claim 1 or 2, **characterized in that** the non relevant information consist in parts containing non disturbing noise information.

5. An information-carrying medium according to any of preceding claims, **characterized in that** the parts provided with non relevant information are randomly distributed over the length of the track.

6. An information-carrying medium according to one of claims 1 - 4, **characterized in that** the track is provided with parts containing non relevant information which form a fixed pattern in relation to the starting point of the information.

7. An information-carrying medium according to one of claims 1 - 6, **characterized in that** each part provided with non relevant information has its own length which is not dependent upon the length of the other parts provided with non relevant information.
